# FASCICULE DE BREVET EUROPEEN

(11) **EP 0 778 076 B1**
(45) Date de publication et mention de la délivrance du brevet: **05.11.2003**
(21) Numéro de dépôt: 96402589.4
(22) Date de dépôt: 29.11.1996
(51) Int. Cl.: B01D 71/02, B01J 29/06, B01J 20/18, B01J 35/06

(54) **Procédé d'élaboration de membranes supportées**
Verfahren zur Herstellung von gestützten Membranen
Process for the preparation of supported membranes

(30) Priorité: 08.12.1995 FR 9514563
(43) Date de publication de la demande: 11.06.1997
(73) Titulaire: Institut Français du Pétrole, 92852 Rueil-Malmaison Cedex (FR)
(72) Inventeur: Anstett, Martine, 92500 Rueil Malmaison (FR); Le Dred, Ronan, 68400 Riedisheim (FR); Guth, Jean-Louis, 68200 Mulhouse (FR); Methivier, Alain, 92500 Rueil Malmaison (FR); Streicher, Christian, 92502 Rueil Malmaison (FR)

(56) Documents cités:
- EP-A- 0 511 739
- EP-A- 0 586 745
- WO-A-93/17781
- WO-A-93/19840
- WO-A-94/25152
- US-A- 5 183 482
- JOURNAL OF THE CHEMICAL SOCIETY FARADAY TRANSACTIONS, vol. 88, no. 20, 21 Octobre 1992, CAMBRIDGE,GB, page 3101-3109 XP000309936 E.R.GEUS, ET AL: "synthesis and characterization of zeolite (mfi) membranes on porous ceramic supports"

## Description

L'invention concerne un procédé d'élaboration contrôlée de membranes supportée.

Les zéolithes sont utilisées pour leurs propriétés de séparation par adsorption sélective ou leur propriétés catalytiques. Cependant, la séparation sur une zéolithe en poudre est un procédé discontinu. Une membrane de zéolithe offre la possibilité de séparer des molécules par un procédé continu économiquement intéressant.

Divers procédés d'élaboration de membranes de zéolithe ont déjà été décrits. Ces membranes sont souvent préparées par cristallisation d'un film de zéolithe sur et/ou dans un support poreux ou sur un support non poreux. Deux cas sont possibles.

Dans le premier cas, le support est immergé dans un gel précurseur de zéolithe et l'ensemble est soumis à des conditions hydrothermales afin de cristalliser la zéolithe. La demande de brevet JP-A-60/129 119, par exemple, décrit une membrane composée d'un film de zéolithe cristallisé sur la surface d'un support en alumine. Dans le brevet US-A-5 100 596, une membrane est obtenue par cristallisation d'un tamis moléculaire sur une surface non poreuse et séparation du film de cette surface. Dans la demande de brevet EP-A-481660, concernant une membrane de zéolithe supportée, la couche de zéolithe est liée directement au support. Avant la cristallisation de la zéolithe, le support est mis au contact d'une solution ou d'une suspension contenant une source d'acide silicique pour conduire à la formation d'oligomères d'acide silicique sur la surface. La demande de brevet JP-A-06/321 530 décrit un procédé d'élaboration de membranes composites dans lequel la température de synthèse est augmentée pendant la cristallisation.

Dans le deuxième cas, le support est mis au contact d'une solution colloïdale, séparé de celle-ci et placé dans de la vapeur d'eau saturante afin de cristalliser la zéolithe à partir de la solution adsorbée. La demande internationale WO-A-93/17 781 décrit un procédé de formation d'une membrane de zéolithe par exposition à de la vapeur d'eau saturante d'une solution colloïdale aqueuse ou alcoolique déposée sur un support poreux.

Les procédés d'élaboration de membranes composites à partir de gels de synthèse conduisent généralement à la formation de cristaux de zéolithes à l'extérieur du support. De plus, un contrôle de la régularité de la distribution des réactifs dans le gel s'avère difficile. Le remplacement de ce gel par une solution colloïdale ou une solution des réactifs permet la formation de cristaux dans le volume poreux du support et par conséquent une bonne adhésion de la zéolithe au support, ainsi qu'une distribution plus régulière des réactifs. Mais les réactifs et par conséquent la zéolithe occupent l'intégralité du support et ne sont pas forcément localisés à l'endroit de la formation de la membrane. Un nouveau procédé permettant la formation d'une couche bien liée au support, homogène et localisée près de la surface du support s'avère donc nécessaire.

La présente invention concerne un procédé de préparation d'une membrane composite constituée d'une couche continue de zéolithe, d'épaisseur contrôlée, localisée principalement à la surface d'un support poreux, caractérisée en ce qu'il comprend au moins (a) une étape de formation d'un gel, localisé principalement à ladite surface dudit support poreux, par mise en contact dudit support poreux successivement et dans un ordre quelconque avec deux liquides immiscibles contenant les agents nécessaires à la formation dudit gel : un liquide aqueux et un liquide contenant les sources hydrolysables conduisant audit oxyde, immiscible audit liquide aqueux ; ledit support poreux imprégné par le premier liquide étant mis en contact avec le second liquide ; puis (b) une étape de transformation dudit gel en la zéolithe recherchée ; et enfin (c) l'élimination des agents résiduels.

Le procédé de l'invention s'applique également à la préparation d'une membrane de silico-métallate, d'oxyde mésoporeux ou d'oxyde microporeux.

Ce procédé conduit à une membrane composite constituée d'une couche continue et mince de zéolithe (ou silico-métallate ou oxyde mésoporeux ou oxyde microporeux) localisée principalement à la surface d'un support poreux à l'extérieur mais également à l'intérieur de celui-ci. Ce fait permet une bonne adhésion de la zéolithe (ou silico-métallate ou oxyde mésoporeux ou oxyde microporeux) au support. De plus, l'épaisseur de cette couche ainsi que la taille et la morphologie des cristaux sont contrôlées. L'épaisseur est contrôlée par la quantité de gel incorporé. La taille et la morphologie dépendent des proportions relatives des différents réactifs constitutifs du gel. Par conséquent, ce procédé peut conduire à la formation de couches d'épaisseur faible, adaptées à une éventuelle utilisation en séparation.

L'invention est décrite de façon plus détaillée ci-après, en liaison avec les figures 1 à 5, parmi lesquelles :
- les figures 1A et 1B représentent schématiquement le principe de formation du gel, localisé principalement à la surface du support poreux selon les procédés A et B, décrits ci-après ;
- la figure 2 représente le pourcentage de silice formée selon le procédé A dans un support en alumine par hydrolyse du tétraméthoxysilane en présence d'eau et condensation des groupes silanols formés, en fonction de la durée du contact entre l'ensemble support et eau avec le tétraméthoxysilane ;
- la figure 3 représente le pourcentage de silice formée selon le procédé B dans un support en alumine par hydrolyse du tétraméthoxysilane en présence d'eau, de méthanol et d'ammoniaque et condensation des groupes silanols formés en fonction du nombre d'incorporations du tétraméthoxysilane ;
- la figure 4 représente schématiquement le dispositif expérimental de cristallisation hydrothermale de la zéolithe ;
- et la figure 5 montre un profil de répartition du silicium et de l'aluminium dans l'épaisseur d'une membrane de zéolithe.

Plus particulièrement, dans le procédé de l'invention, le support est constitué d'un matériau poreux dont les pores ont un diamètre compris entre 4 nm et 100 µm, préférentiellement entre 4 nm et 10 µm et dont la fraction de volume poreux total est supérieure à 5 %, préférentiellement à 40 %.

Le support est constitué d'un matériau inorganique, organique ou mixte. Un support en céramique à base d'alumine et/ou de zircone et/ou d'oxyde de titane est un exemple approprié. Cependant, d'autres matériaux peuvent convenir : métal (acier inoxydable, argent), verre (verre fritté, verre Vycor®, microfibres de verre), carbone, silice (aérogel), zéolithes, argiles ou polymères. L'utilisation d'un support en alumine - α (notamment une alumine - α commercialisée par la société Velterop) est préférée.

Toutes les géométries peuvent convenir pour le support. La géométrie peut être plane : disque, feuille, etc. Elle peut également être tubulaire ou sous forme de spirale.

Le support poreux est mis en contact successivement avec deux liquides immiscibles contenant les agents nécessaires à la formation du gel : un liquide contenant les sources des éléments de charpente hydrolysables et un liquide aqueux. Le liquide contenant les sources des éléments de charpente hydrolysables est constitué soit de ces sources pures ou diluées dans un solvant miscible mais immiscible au liquide aqueux afin d'éviter une homogénéisation des deux liquides. Les sources des éléments de charpente hydrolysables sont susceptibles de conduire à des tétraèdres TO₄ (où T représente par exemple un élément choisi par exemple parmi Si, Al, B, Ga, Ge et P) et sont choisis dans le groupe formé par les alcoxydes de silicium et d'aluminium et les chlorures de silicium et d'aluminium, tels que par exemple le tétrachlorure de silicium et le trichlorure d'aluminium. Ce sont préférentiellement les alcoxydes de silicium ou d'aluminium. Le liquide aqueux est constitué d'eau pure, éventuellement additionnée d'un solvant organique polaire et/ou d'un ou de plusieurs adjuvants de la réaction de formation du gel et/ou d'un ou de plusieurs adjuvants de la cristallisation de la zéolithe. Si le solvant organique polaire est miscible au liquide contenant les sources des éléments de charpente hydrolysables, il doit être incorporé en faible quantité, ou la réaction de formation du gel doit être extrêmement rapide.

Les adjuvants de la réaction de formation du gel sont constitués d'acides ou de bases minéraux et/ou organiques qui jouent le rôle de catalyseurs. Les acides chlorhydrique et fluorhydrique, la soude et l'ammoniaque sont des exemples appropriés.

Les adjuvants de la cristallisation de la zéolithe sont constitués d'acides ou de bases et/ou de sels minéraux et/ou organiques et/ou des molécules non dissociées servant essentiellement d'agents mobilisateur et structurant et de contre-ion de la charge de la charpente. Les ions fluorure ou hydroxyde sont les principaux agents mobilisateurs, introduits par exemple sous forme d'hydroxyde de sodium et d'acide fluorhydrique. Divers agents structurants minéraux ou organiques peuvent convenir : des cations hydratés (ions sodium ou potassium), des paires ioniques (ions ammonium ou phosphonium et les anions correspondants) ou des molécules neutres (amines, alcools, ou éthers). Comme adjuvants de cristallisation, on utilise le plus souvent l'hydroxyde ou le bromure de tétrapropylammonium, les hydroxydes de sodium et potassium, l'ammoniaque, l'acide fluorhydrique et comme éthers, les éthers-couronnes.

La première étape de formation du gel consiste à sécher le support poreux, à le refroidir à la température ambiante et à l'imprégner avec le liquide aqueux ou le liquide contenant les sources des éléments de charpente hydrolysables. Le séchage du support peut être effectué à une température comprise entre 40 et 600°C, parexemple pendant une durée comprise entre 1 minute et 48 heures. Il est préférentiellement effectué à 60°C pendant 1 nuit. L'imprégnation consiste de préférence à immerger le support dans le liquide. Mais d'autres méthodes peuvent être utilisées, par exemple le dépôt du liquide sur la surface du support poreux. L'imprégnation peut être effectuée à une température comprise entre - 20 et 200°C, par exemple pendant une durée comprise entre 1 minute et 72 heures et sous une pression comprise entre 10-5 et 1 atm. Par exemple, l'imprégnation peut être effectuée à la température ambiante, pendant 30 minutes et sous une pression de 2.10⁻² atm.

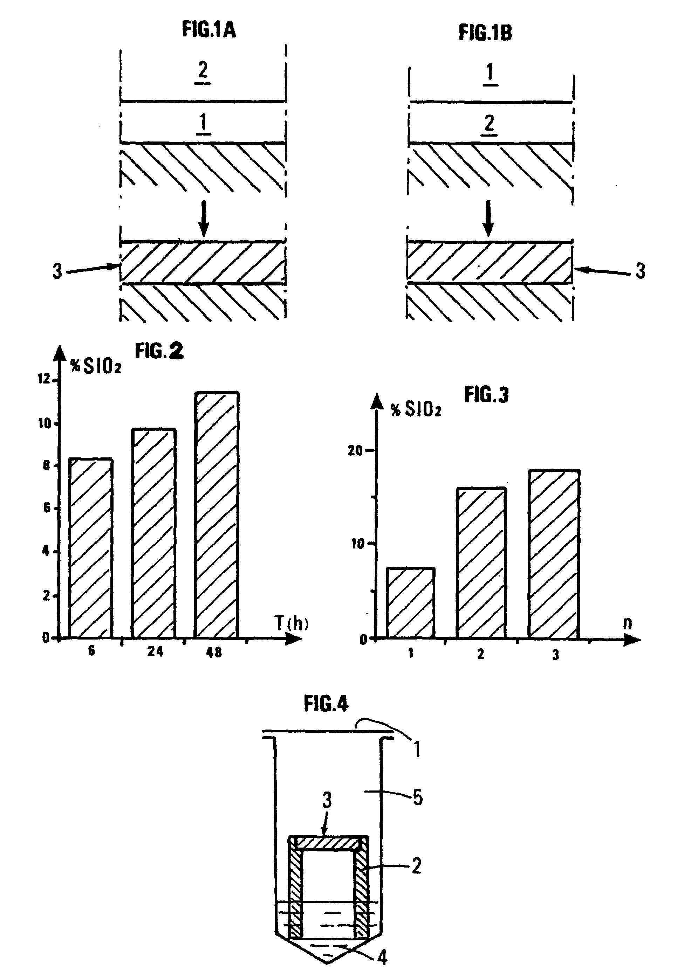

La deuxième étape de formation du gel consiste à mettre le support imprégné du premier liquide au contact du deuxième liquide immiscible au premier. Le gel peut être formé suivant les procédés A et B décrits en liaison avec les figures 1A et 1B, sur lesquelles (1) représente le liquide aqueux, (2) le liquide contenant les sources des éléments de charpente hydrolysables et (3) le gel.

Dans le procédé A, le support poreux imprégné du liquide aqueux est mis au contact du liquide contenant les sources des éléments de charpente hydrolysables, de préférence, le tétraméthoxysilane. Deux cas sont possibles. Dans le premier cas, le liquide aqueux est constitué d'eau pure. La réaction de formation du gel est lente. La quantité de gel formé est fonction de la durée du contact entre l'ensemble support et eau et le liquide contenant les sources des éléments de charpente hydrolysables. Sur la figure 2, sont portées en abscisses les durées de contact en heures et, en ordonnées, le pourcentage de silice formée par rapport à la masse initiale du support. Pour le tétraméthoxysilane, cette durée peut être comprise entre 1 heure et 15 jours et le pourcentage de la masse de gel de silice incorporé par rapport à la masse initiale du support est préférentiellement compris entre 4 et 15. Dans le deuxième cas, le liquide aqueux est constitué d'eau additionnée d'un solvant organique polaire et/ou de plusieurs adjuvants. En présence de ceux-ci, la réaction de formation du gel doit de préférence être rapide pour éviter une diffusion des réactifs du liquide aqueux hors du support poreux. Elle peut être rapide et complète en présence d'un catalyseur. Les agents mobilisateurs, tels les ions fluorures ou hydroxydes, sont préférentiellement utilisés pour jouer ce rôle. La vitesse de formation du gel est fonction de la composition du liquide aqueux. Par exemple, la vitesse est d'autant plus élevée que la solution est plus basique.

Dans le procédé B, le support poreux imprégné du liquide contenant les sources des éléments de charpente hydrolysables, de préférence le tétraméthoxysilane, est mis au contact du liquide aqueux. Deux cas sont possibles. Dans le premier cas, le liquide aqueux est constitué d'eau pure. La réaction de formation du gel est lente. La quantité de gel formé est fonction de la durée du contact entre l'ensemble support et liquide contenant les sources des éléments de charpente hydrolysables et l'eau. La quantité de gel formé est néanmoins limitée par la quantité de liquide contenant les sources des éléments de charpente hydrolysables introduite initialement dans le support poreux. Dans le deuxième cas, le liquide aqueux est constitué d'eau additionnée d'un solvant organique polaire et/ou de plusieurs adjuvants. En présence de ceux-ci, la réaction de formation du gel doit de préférence être rapide pour éviter une diffusion du liquide contenant les sources des éléments de charpente hydrolysables hors du support poreux. Elle peut être rapide et complète en présence d'un catalyseur. Les agents mobilisateurs, tels les ions fluorures ou hydroxydes, sont préférentiellement utilisés pour jouer ce rôle. La quantité de gel formé et par conséquent l'épaisseur de la couche de zéolithe est contrôlée par la quantité de liquide contenant les sources des éléments de charpente hydrolysables incorporé.

Dans les procédés A et B, la quantité de gel formé peut être augmentée par répétition autant de fois que nécessaire des deux étapes de formation du gel. Sur la figure 3, est porté en abscisses le nombre d'incorporations et, en ordonnées, le pourcentage de silice formée par rapport à la masse initiale du support.

Après formation du gel précédent, des réactifs supplémentaires peuvent être incorporés. Le support contenant le gel formé précédemment est éventuellement lavé par exemple avec du méthanol et séché à une température comprise entre 40 et 200°C pendant une durée comprise entre 1 et 24 heures. Le séchage est de préférence effectué à une température comprise entre 60 et 100°C, par exemple pendant une durée comprise entre 2 et 24 heures. Le support contenant le gel est ensuite mis au contact d'une solution pouvant contenir des adjuvants de la cristallisation de la zéolithe et/ou un appoint d'élément de charpente de la zéolithe, préférentiellement sous la forme d'alcoxydes et/ou d'oxydes de silicium et/ou d'aluminium pour prévenir la formation de fissures éventuelles. Dans le cas d'un gel de silice formé selon un des procédés A et B, le pourcentage de la masse de silice ainsi incorporée par rapport à la masse de silice déjà incorporée peut aller jusqu'à 50. Ce pourcentage est préférentiellement compris entre 10 et 20.

La zéolithe est ensuite cristallisée par mise en contact du gel avec de la vapeur d'eau saturante. Ainsi, le support contenant le gel est placé dans un dispositif approprié (Figure 4) et est exposé à de la vapeur d'eau saturante à une température comprise entre 50 et 300°C, préférentiellement entre 80 et 220°C, par exemple pendant une durée comprise entre 1 heure et 15 jours, préférentiellement entre 3 et 72 heures, afin de faire cristalliser le gel en zéolithe. Le dispositif présenté à titre d'illustration sur la figure 4 consiste en un autoclave ayant une chemise (1) PTFE (polytétrafluoroéthylène), dans lequel est installée une pièce cylindrique (2), également en PTFE, soutenant le support poreux sur lequel est formé le gel (3). L'autoclave contient de l'eau liquide (4) en équilibre à la pression considérée avec la vapeur (5).

Des adjuvants volatils supplémentaires de la cristallisation de la zéolithe peuvent être ajoutés à la vapeur d'eau, par exemple de l'acide fluorhydrique, de l'ammoniaque ou des amines, telles que la propylamine ou la triéthylamine, ou des alcools, tels que le méthanol.

La membrane ainsi formée est refroidie à la température ambiante, lavée de manière à éliminer au moins partiellement les adjuvants de la réaction de formation du gel et/ ou ceux de la cristallisation de la zéolithe. Ce lavage est préférentiellement effectué avec de l'eau distillée. La membrane est ensuite séchée préférentiellement à 60°C pendant une durée comprise entre 2 et 24 heures et refroidie à la température ambiante.

Les opérations suivantes peuvent être répétées autant de fois que nécessaire : la formation du gel suivi de la cristallisation de la zéolithe, du refroidissement, du lavage et du séchage de la membrane formée ; l'apport supplémentaire d'adjuvants de la cristallisation de la zéolithe et/ou d'éléments de charpente de la zéolithe suivi de la cristallisation de la zéolithe, du refroidissement, du lavage et du séchage de la membrane formée.

La membrane est ensuite calcinée par montée progressive à une température comprise entre 300 et 800°C, préférentiellement entre 400 et 600°C. Cette montée peut s'effectuer d'une manière continue ou par paliers par exemple pendant une durée comprise entre 5 et 50 heures. La température de calcination est ensuite maintenue à cette valeur par exemple pendant une durée comprise entre 10 minutes et 24 heures. La membrane est ensuite refroidie progressivement jusqu'à la température ambiante. Le refroidissement peut s'effectuer d'une manière continue ou par paliers par exemple pendant une durée comprise entre 1 et 24 heures.

Ce procédé peut être appliqué à toutes les zéolithes, c'est-à-dire tous les solides cristallisés caractérisés par une structure comportant une charpente tridimensionnelle résultant de l'enchaînement de tétraèdres TO₄ (T étant choisi par exemple parmi Si, Al, B, Ga, Ge et P), chaque atome d'oxygène étant commun à deux tétraèdres, et des canaux et cavités de dimensions moléculaires. Les types structuraux FAU, GME, MOR, OFF, MFI, MEL, FER, LTA et CHA, selon la nomenclature IUPAC, sont des exemples appropriés.

L'épaisseur de la couche continue de zéolithe est contrôlable par la quantité de gel incorporé. Elle est comprise entre 1 et 100 µm et préférentiellement entre 5 et 50 µm. La taille et la morphologie des cristaux dépendent des proportions relatives des différents réactifs constitutifs du gel. Les cristaux formés dans un milieu très basique sont généralement petits, de l'ordre de quelques micromètres. Ils sont d'autant plus petits que le milieu est plus basique.

La méthode de l'invention peut aussi être appliquée à la fabrication de membranes comportant sur un support poreux tous oxydes, que l'on peut désigner par le terme "silico-métallates", dont la structure renferme des tétraèdres SiO₄ et des octaèdres TO₆, où T représente au moins un élément choisi par exemple parmi le titane, le manganèse, le molybdène et le tungstène, par exemple les titanosilicates. Le liquide non miscible au liquide aqueux doit alors contenir les sources des éléments de charpente hydrolysables de l'oxyde recherché.

La méthode de l'invention peut encore être appliquée à la fabrication de membranes constituées de solides mésoporeux (dimensions de pores d'environ 1,5 à 10 nanomètres) sur support poreux. On met le support poreux en contact successivement avec deux liquides immiscibles contenant les agents nécessaires à la formation du solide mésoporeux.

Un des deux liquides immiscibles consiste en un liquide aqueux contenant éventuellement au moins un adjuvant de la réaction de formation d'un gel, acide ou base, et contenant au moins un adjuvant de formation du solide mésoporeux, qui peut consister en un agent tensioactif cationique, en particulier un halogénure d'ammonium quaternaire, par exemple le chlorure ou le bromure d'hexadécyltriméthylammonium, éventuellement additionné d'un acide ou d'une base.

Les adjuvants de la réaction de formation du gel sont les mêmes que dans le cas de la fabrication d'une membrane de zéolithe, c'est-à-dire des acides ou des bases, comme par exemple HCl, HF, NaOH ou NH₃.

Le liquide non miscible au liquide aqueux contient les sources hydrolysables conduisant au solide mésoporeux, choisies parmi les alcoxydes de silicium ou d'aluminium, les chlorures de silicium ou d'aluminium, tels que le tétrachlorure de silicium ou le trichlorure d'aluminium (les alcoxydes de silicium ou d'aluminium étant préférés) et les composés similaires d'autres métaux pouvant entrer dans la composition des solides mésoporeux que l'on souhaite déposer sur le support.

Selon les conditions de la mise en contact du support avec les deux liquides immiscibles, on peut former directement le solide mésoporeux. Si le solide mésoporeux n'est pas obtenu après contact des deux liquides, on peut effectuer un traitement hydrothermal, par exemple par mise en contact avec de la vapeur d'eau saturante à une température de 50 à 300°C, de préférence de 80 à 220°C, pendant une durée de 1 heure à 15 jours, de préférence de 3 à 72 heures, de manière à former le solide mésoporeux, sur le support. On refroidit l'ensemble, par exemple jusqu'à température ambiante.

Dans tous les cas, la membrane formée est ensuite lavée, séchée et calcinée dans les conditions décrites plus haut pour les membranes de zéolithe.

Parmi les solides mésoporeux que l'on peut déposer sur des supports poreux pour former des membranes par la méthode de l'invention, on citera ceux de la famille des M41 S et plus spécifiquement ceux du type MCM-41.

Des membranes constituées d'oxydes microporeux non zéolithiques sur support poreux peuvent enfin être fabriquées par la méthode de l'invention incluant la formation d'un gel par mise en contact d'un support poreux avec deux liquides immiscibles contenant les agents nécessaires à la formation dudit gel : un liquide aqueux et un liquide non miscible contenant les sources hydrolysables conduisant à l'oxyde microporeux recherché. Dans ce cas, le liquide aqueux ne contient pas d'adjuvants de cristallisation, mais seulement le ou les adjuvants de la réaction de formation du gel et le ou les adjuvants de la réaction de formation de l'oxyde.

Le support comportant le gel formé est séché à une température comprise entre 20 et 200°C, par exemple pendant une durée de 5 minutes à 24 heures; puis calciné à une température de 300 à 600°C, de préférence d'environ 400°C, par exemple pendant une durée de 5 minutes. à 24 heures. La membrane calcinée et ensuite refroidie à température ambiante.

Les oxydes microporeux peuvent consister par exemple en silices, des alumines, des aluminosilicates ou des oxydes simples ou combinés de divers autres métaux.

Les membranes obtenues par la méthode de l'invention sont avantageusement utilisables dans des procédés de séparation de gaz ou de séparation de liquides, par pervaporation. Parmi les procédés de séparation, on peut citer notamment :
- la séparation des isomères n et iso d'hydrocarbures en C4, C5, C6, C7 ou C8;
- la séparation des isomères paraffiniques en C6 et C7 en fonction de leur degré de ramification (isomères mono-, di- ou triramifiés);
- la séparation du p-xylène à partir d'une coupe contenant au moins un autre xylène;
- la séparation du méthane et de l'azote;
- ou encore la séparation du méthane et du dioxyde de carbone.

Les exemples qui suivent sont destinés à illustrer l'invention de façon non limitative.

### Exemple 1 (Préparation selon le procédé A)

Un support en alumine-α (de la Société Velterop) avec des pores de diamètre de 0,15 µm est séché à 60°C pendant une nuit, refroidi à la température ambiante dans un dessiccateur garni de silica gel et pesé. Sa masse est de 1,9563 g. Il est immergé dans 17g d'une solution aqueuse contenant 4 % de NaOH et 3,1 % d'hydroxyde de tétrapropylammonium TPAOH (% en masse) pendant 2 heures. Le support contenant 0,37 g de solution est ensuite immergé dans 10 g de Si(OCH₃)₄ pendant 3 heures. Après séparation, la masse du support augmente de 0,09 g. Le support et le gel précurseur de zéolithe formé sont placés dans de la vapeur d'eau saturante à 170°C pendant 48 heures. L'autoclave est refroidi à la température ambiante. Le support est lavé avec de l'eau distillée, séché à 60°C pendant une nuit, refroidi à la température ambiante dans un dessiccateur garni de silica gel et pesé. Sa masse est de 2,1037 g. Le support est à nouveau immergé dans la solution précédente pendant 2 heures. La masse de solution incorporée est alors de 0,30 g. Puis le support est immergé dans 10 g de Si(OCH₃)₄ pendant 3 heures. Après séparation, la masse du support augmente de 0,02 g. Une deuxième cristallisation de zéolithe est effectuée dans de la vapeur d'eau saturante à 170°C pendant 48 heures. L'autoclave est refroidi à la température ambiante. La membrane est lavée avec de l'eau distillée, séchée à 60°C pendant une nuit, refroidie à la température ambiante dans un dessiccateur garni de silica gel, calcinée à 500°C pendant 6 heures (vitesse de chauffe : 0,5°C/min ; vitesse de refroidissement : 1°C/min) puis refroidie à la température ambiante.

Avant l'étape de calcination (canaux de la zéolithe obstrués par les ions tétrapropylammonium TPA⁺), la membrane est étanche au méthane. Ceci montre l'absence d'espaces entre les cristaux de zéolithe. La taille moyenne des cristaux de zéolithe dans la membrane formée est de l'ordre de 5 µm.

### Exemple 2 (Préparation selon le procédé A)

Le mode opératoire est semblable à celui de la membrane décrite dans l'exemple 1, à l'exception de la composition de la solution aqueuse servant aux réactions d'hydrolyse du Si(OCH₃)₄ et de condensation des espèces formées. Cette solution aqueuse est composée de 4 % de NaOH et de 6,2 % de TPAOH. La taille moyenne des cristaux de zéolithe est de l'ordre de 2 µm, alors que celle de la membrane décrite dans l'exemple 1 était de l'ordre de 5 µm. Ceci montre que la taille des cristaux est contrôlable grâce à la composition de la solution.

### Exemple 3 (Préparation selon le procédé B)

Un support en alumine-α (de la société Velterop) avec des pores de diamètre de 0,15 µm est séché à 60°C pendant une nuit, refroidi à la température ambiante dans un dessiccateur garni de silica gel et pesé. Sa masse est de 1,9487 g. Il est disposé en équilibre instable sur un cristallisoir contenant du tétraméthoxysilane. L'ensemble est placé dans une enceinte sous pression réduite pendant 10 minutes afin d'éliminer l'air occlus dans le support. Celui-ci est alors basculé dans le tétraméthoxysilane toujours sous pression réduite. La durée d'immersion est de 30 minutes. Le support contenant 0,33 g de tétraméthoxysilane est immergé dans 7,2 g d'une solution constituée d'un mélange d'eau, d'ammoniaque et de méthanol pendant 30 minutes. La composition molaire de cette solution ramenée à une mole de Si(OCH₃)₄ est la suivante: 16,7 NH₃ ; 46,7 CH₃OH ; 50 H₂O. Le support contenant le gel de silice est ensuite lavé avec du méthanol, séché à 60°C pendant une nuit, puis à 100°C pendant 2 heures, refroidi à la température ambiante dans un dessiccateur garni de silica gel et pesé. La masse de gel de silice formé dans le support est de 0,15 g. Le support contenant le gel de silice est immergé dans 15 g d'une solution aqueuse de silicate de sodium et de bromure de tétrapropylammonium de composition molaire : SiO₂ ; 0,6 NaOH ; 0,1 TPABr ; 20 H₂O pendant 1 heure. La masse de cette solution incorporée est de 0,23 g. Le support contenant le gel précurseur de zéolithe est placé dans de la vapeur d'eau saturante à 170°C pendant 48 heures. L'autoclave est refroidi à la température ambiante. Le support est lavé avec de l'eau distillée, séché à 60°C pendant 2 heures, refroidi à la température ambiante dans un dessiccateur garni de silica gel et à nouveau immergé dans la solution précédente pendant 2 heures. La masse de solution incorporée est alors de 0,36 g. Une deuxième cristallisation de zéolithe est effectuée dans de la vapeur d'eau saturante à 170°C pendant 48 heures. L'autoclave est refroidi à la température ambiante. La membrane est lavée avec de l'eau distillée, séchée à 60°C pendant une nuit, refroidie à la température ambiante dans un dessiccateur garni de silica gel, calcinée à 500°C pendant 6 heures (vitesse de chauffe: 0,5°C/min ; vitesse de refroidissement : 1°C/min) puis refroidie à la température ambiante.

Avant l'étape de calcination (canaux de la zéolithe obstrués par TPA⁺), la membrane est étanche au méthane. Ceci montre l'absence d'espaces entre les cristaux de zéolithe.

### Exemple 4

Des mesures de perméation gazeuse sont effectuées sur la membrane préparée comme décrit dans l'exemple 3.

La membrane est collée sur un disque métallique perforé à l'aide de résine époxy étanche aux gaz. L'ensemble est placé dans un appareil de perméation gazeuse et la membrane est soumise à une différence de pression. La pression du côté amont est maintenue constante à 2 bars absolus et la pression du côté aval est la pression atmosphérique. Le débit de gaz est mesuré à l'aide d'un débitmètre.

Les débits sont mesurés après calcination de la membrane à 500°C pendant 6 heures et activation de la zéolithe à 373 K (Tableau 1).

**Tableau 1 :**

| Débits de divers gaz | | | |
|---|---|---|---|
| Gaz | Différence de pression (bar) | Débit (cm³/h) température ambiante | Débit (cm³/h) 373 K |
| H₂ | 1 | 281 | -- |
| CH₄ | 1 | 126,7 | 128,6 |
| i-C₄H₁₀ | 1 | 5 | 5 |

La sélectivité du méthane par rapport à l'isobutane n'est que de 1,5 pour le support sans zéolithe. Elle est de 25,3 à la température ambiante et de 25,7 à 373 K pour la membrane.

### Exemple 5

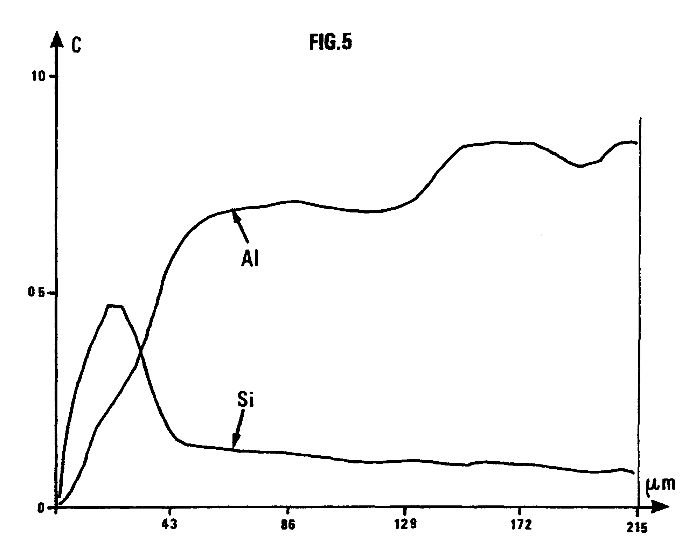

Un profil de répartition des éléments Si et Al est réalisé sur la membrane de l'exemple 3 sur une épaisseur de l'ordre de 200 µm. Il indique que les atomes de silicium, par conséquent la zéolithe, sont localisés principalement à la surface du support (Figure 5). Sur la figure 5, sont portés en abscisses les diamètres en micromètres et en ordonnées, les concentrations en poids de silicium et d'aluminium.

### Exemple 6 (Préparation selon le procédé B)

Un support en alumine-α (de la société Velterop) avec des pores de diamètre de 0,15 µm est séché à 60°C pendant une nuit, refroidi à la température ambiante dans un dessiccateur garni de silica gel et pesé. Sa masse est de 1,9596 g. Il est disposé en équilibre instable sur un cristallisoir contenant du tétraméthoxysilane. L'ensemble est placé dans une enceinte sous pression réduite pendant 10 minutes afin d'éliminer l'air occlus dans le support. Celui-ci est alors basculé dans le tétraméthoxysilane toujours sous pression réduite. La durée d'immersion est de 30 minutes. Le support contenant 0,33 g de tétraméthoxysilane est immergé dans 7,2 g d'une solution constituée d'un mélange d'eau, d'ammoniaque et de méthanol pendant 30 minutes. La composition molaire de cette solution ramenée à une mole de Si(OCH₃)₄ est la suivante: 16,7 NH₃ ; 46,7 CH₃OH ; 50 H₂O. Le support contenant le gel de silice est ensuite lavé avec du méthanol, séché à 60°C pendant une nuit, puis à 100°C pendant 2 heures, refroidi à la température ambiante dans un dessiccateur garni de silica gel et pesé. La masse de gel de silice formé dans le support est de 0,15 g. Le support contenant le gel de silice est immergé dans 10 g d'une solution aqueuse contenant 3,3 % de NaOH et 22,3 % de TPABr (% en masse) sous pression réduite pendant 10 minutes. La masse de solution incorporée est de 0,30 g. L'hydrogel final inclus dans le support présente la composition molaire suivante : SiO₂ ; 0,1 NaOH ; 0,1 TPABr ; 5 H₂O. Le support contenant le gel précurseur de zéolithe est placé dans de la vapeur d'eau saturante à 170°C pendant 48 heures. L'autoclave est refroidi à la température ambiante. La membrane est lavée avec de l'eau distillée, séchée à 60°C pendant une nuit, refroidie à la température ambiante dans un dessiccateur garni de silica gel, calcinée à 550°C pendant 6 heures (vitesse de chauffe : 0,5°C/min ; vitesse de refroidissement : 1°C/min) puis refroidie à la température ambiante.

Avant l'étape de calcination (canaux de la zéolithe obstrués par TPA⁺), la membrane est étanche au méthane. Ceci montre l'absence d'espaces entre les cristaux de zéolithe.

## Revendications

1. Une méthode de préparation d'une membrane composite constituée d'une couche continue, d'épaisseur contrôlée, d'oxyde choisi parmi les zéolithes, les silico-métallates, les oxydes mésoporeux et les oxydes microporeux, localisée principalement à la surface d'un support poreux, **caractérisée en ce qu'**elle comprend au moins :
- une étape (a) de formation d'un gel, localisé principalement à ladite surface dudit support poreux, par mise en contact dudit support poreux successivement et dans un ordre quelconque avec deux liquides immiscibles contenant les agents nécessaires à la formation dudit gel : un liquide aqueux et un liquide contenant les sources hydrolysables conduisant audit oxyde, immiscible audit liquide aqueux ; ledit support poreux imprégné par le premier liquide étant mis en contact avec le second liquide ;
- une étape (b) de transformation dudit gel en l'oxyde recherché ;
- et une étape (c) d'élimination des agents résiduels.

2. Une méthode selon la revendication 1, dans laquelle le support est constitué d'un matériau poreux dont les pores ont des diamètres compris entre 4 nm et 100 µm et dont la fraction de volume poreux total est supérieure à 5 %.

3. Une méthode selon la revendication 1 et 2, dans laquelle le support est constitué d'un matériau inorganique, organique ou mixte, choisi parmi les matériaux céramiques à base d'alumine, de zircone ou d'oxyde de titane, les métaux, les verres, le carbone, la silice, les zéolithes, les argiles et les polymères.

4. Une méthode selon l'une des revendications 1 à 3, dans laquelle lesdites sources hydrolysables sont choisies parmi les alcoxydes de silicium ou d'aluminium et les chlorures de silicium ou d'aluminium.

5. Une méthode selon l'une des revendications 1 à 4, dans laquelle le liquide contenant lesdites sources hydrolysables est constitué desdites sources pures ou diluées dans un solvant non miscible audit liquide aqueux.

6. Une méthode selon l'une des revendications 1 à 5, dans laquelle ledit liquide aqueux est constitué d'eau pure ou additionnée d'au moins un élément choisi parmi: au moins un solvant organique polaire, au moins un adjuvant de la réaction de formation dudit gel et au moins un adjuvant de la synthèse dudit oxyde.

7. Une méthode selon la revendication 6, dans laquelle ledit adjuvant de la réaction de formation du gel est choisi parmi les acides et les bases minéraux ou organiques.

8. Une méthode selon la revendication 6, dans laquelle ledit adjuvant de la formation dudit oxyde est choisi parmi les acides et les bases.

9. Une méthode selon l'une des revendications 1 à 8, dans laquelle on effectue un séchage puis une imprégnation dudit support poreux avec ledit liquide aqueux, suivie d'une mise en contact de la surface dudit support imprégné avec ledit liquide contenant les sources hydrolysables conduisant audit oxyde.

10. Une méthode selon l'une des revendications 1 à 8, dans laquelle on effectue un séchage puis une imprégnation dudit support poreux avec ledit liquide contenant les sources hydrolysables conduisant audit oxyde, suivie d'une mise en contact de la surface dudit support imprégné avec ledit liquide aqueux.

11. Une méthode selon l'une des revendications 9 et 10, dans laquelle on réitère au moins une fois les opérations qui y sont décrites.

12. Une méthode selon l'une des revendications 1 à 11, dans laquelle l'oxyde consiste en une zéolithe.

13. Une méthode selon la revendication 12, dans laquelle ledit liquide aqueux est constitué d'eau additionnée d'au moins un élément choisi parmi : au moins un solvant organique polaire, au moins un adjuvant de la réaction de formation dudit gel et au moins un adjuvant de la synthèse dudit oxyde.

14. Une méthode selon la revendication 13, dans laquelle l'adjuvant de la réaction de formation du gel est choisi parmi l'acide chlorhydrique, l'acide fluorhydrique, la soude et l'ammoniaque.

15. Une méthode selon l'une des revendications 13 et 14, dans laquelle l'adjuvant de la cristallisation de la zéolithe est choisi parmi l'hydroxyde ou le bromure de tétrapropylammonium, les hydroxydes de sodium ou de potassium, l'ammoniaque, l'acide fluorhydrique et les éthers-couronnes.

16. Une méthode selon l'une des revendications 12 à 15, dans laquelle on effectue éventuellement un lavage, un séchage, suivi d'une seconde mise en contact dudit gel formé avec une solution contenant au moins un adjuvant de la cristallisation de la zéolithe et/ou un appoint de sources hydrolysables des éléments de charpente de la zéolithe.

17. Une méthode selon l'une des revendications 12 à 16, dans laquelle on effectue la cristallisation de la zéolithe par mise en contact du gel formé avec de la vapeur d'eau saturante à des températures comprises entre 50 et 300°C.

18. Une méthode selon la revendication 17, dans laquelle ladite phase vapeur contient des adjuvants volatils choisis parmi les acides, les bases, les amines et les alcools.

19. Une méthode selon l'une des revendications 12 à 18, dans laquelle la membrane formée est refroidie et lavée et la membrane lavée est ensuite séchée.

20. Une méthode selon l'une des revendications 12 à 19, dans laquelle on réitère au moins une fois sur ladite membrane formée les opérations qui y sont décrites.

21. Une méthode selon l'une des revendications 12 à 20, dans laquelle la membrane obtenue est calcinée par montée progressive à une température de calcination comprise entre 300 et 800°C, par exemple pendant une durée comprise entre 5 et 50 heures, ladite membrane étant maintenue à ladite température de calcination, par exemple pendant une durée comprise entre 10 minutes et 24 heures, ladite membrane calcinée étant ensuite refroidie progressivement jusqu'à la température ambiante, par exemple pendant une durée comprise entre 1 et 24 heures.

22. Une méthode selon la revendication 21, dans laquelle la zéolithe formée comprend un enchaînement de tétraèdres TO₄ où T est au moins un élément choisi parmi Si, Al, B, Ga, Ge et P.

23. Une méthode selon la revendication 21 ou 22, dans laquelle la zéolithe formée est d'un type structural choisi parmi FAU, GME, MOR, OFF, MFI, MEL, FER, LTA et CHA.

24. Une méthode selon l'une des revendications 21 à 23, dans laquelle l'épaisseur de ladite couche continue de zéolithe est comprise entre 1 et 100 µm.

25. Une méthode selon l'une des revendications 1 à 11, dans laquelle l'oxyde consiste en un silico-métallate renfermant des tétraèdres SiO₄ et des octaèdres TO₆, avec T choisi parmi Ti, Mn, Mo et W, tel qu'un titanosilicate.

26. Une méthode selon l'une des revendications 1 à 11, dans laquelle l'oxyde consiste en un oxyde mésoporeux.

27. Une méthode selon la revendication 26, dans laquelle on utilise comme adjuvant de la synthèse de l'oxyde mésoporeux un tensioactif cationique tel qu'un halogénure d'hexadécyltriméthylammonium.

28. Une méthode selon l'une des revendications 26 et 27, dans laquelle l'oxyde mésoporeux est synthétisé directement après mise en contact des deux liquides immiscibles.

29. Une méthode selon l'une des revendications 26 et 27, dans laquelle l'oxyde mésoporeux est synthétisé après mise en contact des deux liquides immiscibles, puis mise en contact du gel formé avec de la vapeur d'eau saturante à une température comprise entre 50 et 300°C, par exemple pendant une durée comprise entre 1 heure et 15 jours.

30. Une méthode selon l'une des revendications 26 à 29, dans laquelle la membrane obtenue est calcinée par montée progressive à une température de calcination comprise entre 300 et 800°C, par exemple pendant une durée comprise entre 5 et 50 heures, ladite membrane étant maintenue à ladite température de calcination par exemple pendant une durée comprise entre 10 minutes et 24 heures, ladite membrane calcinée étant ensuite refroidie progressivement jusqu'à la température ambiante, par exemple pendant une durée comprise entre 1 heure et 24 heures.

31. Une méthode selon l'une des revendications 1 à 11, dans laquelle ledit oxyde est un oxyde microporeux non zéolithique et on met en jeu un liquide aqueux qui contient le ou les adjuvants de la réaction de formation du gel et le ou les adjuvants de la réaction de formation de l'oxyde et un liquide non miscible contenant les sources hydrolysables conduisant à l'oxyde microporeux recherché.

32. Une méthode selon la revendication 31, dans laquelle le support comportant le gel formé est séché à une température comprise entre 20 et 200°C, par exemple pendant une durée de 5 minutes à 24 heures; puis calciné à une température de 300 à 600°C par exemple pendant une durée de 5 minutes à 24 heures, la membrane calcinée étant ensuite refroidie à température ambiante.

## Patentansprüche

1. Verfahren zur Herstellung einer Verbundmembran, die aus einer durchgehenden Schicht kontrollierter Dicke von Oxid besteht, das gewählt ist aus den Zeolithen, den Silicometallaten, den mesoporösen Oxiden und den mikroporösen Oxiden, lokalisiert hauptsächlich auf der Oberfläche eines porösen Trägers, **dadurch gekennzeichnet, dass** es wenigstens umfasst:
a. eine Stufe (a) der Bildung eines Gels, hauptsächlich lokalisiert an dieser Oberfläche dieses porösen Trägers, durch Kontaktieren dieses porösen Trägers nacheinander und in beliebiger Reihenfolge mit zwei nicht mischbaren Flüssigkeiten, welche die zur Bildung dieses Gels notwendigen Agenzien enthalten: eine wässrige Flüssigkeit und eine die hydrolisierbaren Quellen enthaltende Flüssigkeit, was zu diesem Oxid führt, und zwar nicht mischbar mit dieser wässrigen Flüssigkeit, wobei dieser poröse durch die erste Flüssigkeit imprägnierte Träger mit der zweiten Flüssigkeit kontaktiert wird;
b. eine Stufe (b) der Umformung dieses Gels in das gesuchte Oxid; und
c. eine Stufe (c) zu Eliminierung der restlichen Agenzien.

2. Verfahren nach Anspruch 1, bei dem der Träger gebildet wird aus einem porösen Material, dessen Poren Durchmesser zwischen 4 nm und 100 µm haben und dessen gesamter poröser Volumenanteil größer als 5 % ist.

3. Verfahren nach Anspruch 1 und 2, bei dem der Träger gebildet wird aus einem anorganischen, organischen oder gemischten Material, gewählt aus den keramischen Materialien auf der Basis von Aluminiumoxid, von Zirkon oder Titanoxid, den Metallen, den Gläsern, Kohlenstoff, Siliziumoxid, den Zeolithen, den Tonen und den Polymeren.

4. Verfahren nach einem der Ansprüche 1 bis 3, bei dem diese hydrolisierbaren Quellen gewählt sind aus den Alkoxiden von Silizium oder Aluminium und den Chloriden von Silizium oder Aluminium.

5. Verfahren nach einem der Ansprüche 1 bis 4, bei dem die diese hydrolisierbaren Quellen enthaltende Flüssigkeit gebildet wird aus diesen reinen Quellen oder verdünnt in einem mit dieser wässrigen Flüssigkeit nicht lösbaren Lösungsmittel.

6. Verfahren nach einem der Ansprüche 1 bis 5, bei dem diese wässrige Flüssigkeit gebildet wird aus reinem Wasser unter Zugabe wengstens eines Elements, das gewählt ist aus: wenigstens einem polaren organischen Lösungsmittel, wenigstens einem Zusatzstoff für die Bildungsreaktion dieses Gels und wenigstens einem Zusatzstoff für die Synthese dieses Oxids.

7. Verfahren nach Anspruch 6, bei dem dieser Zusatzstoff für die Gelbildungsreaktion gewählt ist aus den mineralischen oder organischen Säuren und Basen.

8. Verfahren nach Anspruch 6, bei dem dieser Zusatzstoff für die Bildung des Oxids gewählt ist aus den Säuren und den Basen.

9. Verfahren nach einem der Ansprüche 1 bis 8, bei dem man eine Trocknung, dann eine Imprägnierung dieses porösen Trägers mit dieser wässrigen Flüssigkeit, gefolgt von einer Kontaktierung der Oberfläche dieses imprägnierten Trägers mit der Flüssigkeit, welche die zu diesem Oxid führenden hydrolisierbaren Quellen enthält, vornimmt.

10. Verfahren nach einem der Ansprüche 1 bis 8, bei dem man eine Trocknung, dann eine Imprägnierung dieses porösen Trägers mit dieser die hydrolisierbaren Quellen enthaltenden Flüssigkeit, was zum Oxid führt, vornimmt, gefolgt von einer Kontaktierung der Oberfläche dieses imprägnierten Trägers mit dieser wässrigen Flüssigkeit.

11. Verfahren nach einem der Ansprüche 9 und 10, bei dem man wenigstens einmal die hier beschriebenen Vorgänge wiederholt.

12. Verfahren nach einem der Ansprüche 1 bis 11, bei dem das Oxid aus einem Zeolith besteht.

13. Verfahren nach Anspruch 12, bei dem diese wässrige Flüssigkeit gebildet wird aus Wasser unter Zugabe wenigstens eines Elements, gewählt aus: wenigstens einem organischen polaren Lösungsmittel, wenigstens einem Zusatzstoff für die Bildungsreaktion dieses Gels und wenigstens einem Zusatzstoff für die Synthese dieses Oxids.

14. Verfahren nach Anspruch 13, bei dem der Zusatzstoff der Gelbildungsreaktion gewählt ist aus Chlorwasserstoffsäure, Fluorwasserstoffsäure, Soda und Ammoniak.

15. Verfahren nach einem der Ansprüche 13 und 14, bei dem der Zusatzstoff für die Kristallisation des Zeolithen gewählt ist aus dem Hydroxid oder dem Bromid von Tetrapropylammonium, den Hydroxiden des Natriums oder Kaliums, dem Ammoniak, der Fluorwasserstoffsäure und den Kronen-Ethern.

16. Verfahren nach einem der Ansprüche 12 bis 15, bei dem man gegebenenfalls ein Waschen, ein Trocknen, gefolgt von einer zweiten Kontaktierung dieses Gels, gebildet mit einer Lösung vornimmt, die wenigstens einen Zusatzstoff für die Kristallisation des Zeolithen und/oder eine Zugabe hydrolisierbarer Quellen der Elemente des Zeolithgerüstes enthält.

17. Verfahren nach einem der Ansprüche 12 bis 16, bei dem man die Kristallisation des Zeolith durch Kontaktieren des mit gesättigtem Wasserdampf gebildeten Gels bei Temperaturen zwischen 50 und 300°C vornimmt.

18. Verfahren nach Anspruch 17, bei dem diese Dampfphase flüchtige Zusatzstoffe enthält, die gewählt sind aus den Säuren, den Basen, den Aminen und den Alkoholen.

19. Verfahren nach einem der Ansprüche 12 bis 18, bei dem die gebildete Membran gekühlt und gewaschen und die gewaschene Membran anschließend getrocknet wird.

20. Verfahren nach einem der Ansprüche 12 bis 19, bei dem man wenigstens einmal an dieser gebildeten Membran die hierin beschriebenen Vorgänge wiederholt.

21. Verfahren nach einem der Ansprüche 12 bis 20, bei dem die erhaltene Membran kalziniert wird, indem allmählich auf eine Kalzinierungstemperatur zwischen 300 und 800°C, beispielsweise während einer Dauer erhöht wird, die zwischen 5 und 50 Stunden liegt, wobei diese Membran auf dieser Kalzinierungstemperatur beispielsweise während einer Dauer von 10 Minunten bis 24 Stunden gehalten wird und die kalzinierte Membran anschließend progressiv bis zur Umgebungstemperatur, beispielsweise über eine Dauer zwischen 1 und 24 Stunden, gekühlt wird.

22. Verfahren nach Anspruch 21, bei dem der gebildete Zeolith eine Verkettung von Tetraedem TO₄ umfasst, wo T wenigstens ein Element gewählt aus Si, Al, B, Ga, Ge und P ist.

23. Verfahren nach einem der Ansprüche 21 oder 22, bei dem der gebildete Zeolith einer vom Strukturtyp ist, der gewählt ist aus FAU, GME, MOR, OFF, MFI, MEL, FER, LTA und CHA.

24. Verfahren nach einem der Ansprüche 21 bis 23, bei dem die Dicke dieser durchgehenden Zeolithschicht zwischen 1 und 100 µm beträgt.

25. Verfahren nach einem der Ansprüche 1 bis 11, bei dem das Oxid aus einem Silicometallat besteht, welches SiO₄-Tetraeder und Octaeder TO₆ einschließt, wobei T gewählt ist aus Ti, Mn, Mo und W, beispielsweise einem Titansilikat.

26. Verfahren nach einem der Ansprüche 1 bis 11, bei dem das Oxid aus einem mesoporösen Oxid besteht.

27. Verfahren nach Anspruch 26, bei dem man als Zusatzstoff für die Synthese des mesoporösen Oxids ein kationisches oberflächenaktives Mittel, beispielsweise ein Halogenit von Hexadecyltrimethylammonium verwendet.

28. Verfahren nach einem der Ansprüche 26 und 27, bei dem das mesoporöse Oxid direkt nach Kontaktieren der beiden unmischbaren Flüssigkeiten synthetisiert wird.

29. Verfahren nach einem der Ansprüche 26 und 27, bei dem das mesoporöse Oxid nach Kontaktieren der beiden nicht mischbaren Flüssigkeiten synthetisiert und dann mit dem gebildeten Gel mit gesättigtem Wasserdampf bei einer Temperatur zwischen 50 und 300°C, beispielsweise über eine Dauer zwischen 1 Stunde und 15 Tagen kontaktiert wird.

30. Verfahren nach einem der Ansprüche 26 bis 29, bei dem die erhaltene Membran kalziniert wird, indem progressiv auf eine Kalzinierungstemperatur zwischen 300 und 800°C, beispielsweise während einer Dauer zwischen 5 und 50 Stunden erhöht wird, wobei diese Membran bei dieser Kalzinierungstemperatur beispielsweise über eine Dauer zwischen 10 Minuten und 24 Stunden gehalten wird, diese kalzinierte Membran dann allmählich bis auf Umgebungstemperatur, beispielsweise über eine Dauer zwischen 1 Stunde und 24 Stunden gekühlt wird.

31. Verfahren nach einem der Ansprüche 1 bis 11, bei dem dieses Oxid ein nicht zeolithisches mikroporöses Oxid ist und man eine wässrige Flüssigkeit einsetzt, welche den oder die Zusatzstoffe für die Gelbildungsreaktion, den oder die Zusatzstoffe für die Oxidbildungsreaktion und eine nicht mischbare Flüssigkeit umfasst, welche die hydrolisierbaren Quellen, die zum gewünschten mikroporösen Oxid führen, enthält.

32. Verfahren nach Anspruch 31, bei dem der das gebildete Gel umfassende Träger bei einer Temperatur zwischen 20 und 200°C, beispielsweise über eine Dauer von 5 Minuten bis 24 Stunden getrocknet, dann bei einer Temperatur von 300 bis 600°C beispielsweise über eine Dauer von 5 Minuten bis 24 Stunden kalziniert wird und die kalzinierte Membran anschließend auf Umgebungstemperatur gekühlt wird.

## Claims

1. A process for preparing a composite membrane constituted by a continuous layer of controlled thickness of an oxide selected from a zeolite, a silico-metallate, a mesoporous oxide and a microporous oxide, principally localised at the surface of the porous support, **characterized in that** it comprises at least:
- a step (a) of forming a gel localised principally at said surface of said porous support, by bringing said support into contact, in succession and in any order, with two immiscible liquids containing the agents necessary for formation of said gel: an aqueous liquid and a liquid containing the hydrolysable sources leading to said oxide, immiscible with said aqueous liquid; said porous support impregnated with the first liquid is brought into contact with the second liquid;
- a step (b) of transforming said gel into the desired oxide;
- and a step (c) of eliminating the residual agents.

2. A process according to claim 1, in which the support is constituted by a porous material in which the pores have a diameter in the range 4nm to 100 µm, and in which the fraction of the total pore volume is over 5%.

3. A process according to claim 1 or claim 2, in which the support is constituted by an inorganic, organic or mixed material, selected from ceramic materials based on alumina, zirconia or titanium oxide, metals, glasses, carbon, silica, zeolites, clays and polymers.

4. A process according to any one of claims 1 to 3, in which said hydrolysable sources are selected from silicon or aluminium alkoxides and silicon or aluminium chlorides.

5. A process according to any one of claims 1 to 4, in which the liquid containing said hydrolysable sources is constituted by said sources which are pure or diluted in a solvent which is not miscible with said aqueous liquid.

6. A process according to any one of claims 1 to 5, in which said aqueous liquid is constituted by pure water or water to which is added at least one element selected from: at least one polar organic solvent, at least one gel formation reaction additive and at least one oxide synthesis additive.

7. A process according to claim 6, in which said gel formation reaction additive is selected from inorganic or organic acids and bases.

8. A process according to claim 6, in which said oxide formation additive is selected from acids and bases.

9. A process according to any one of claims 1 to 8, in which said porous support is dried then impregnated with said aqueous liquid followed by bringing the surface of said impregnated support into contact with said liquid containing hydrolysable sources leading to said oxide.

10. A process according to any one of claims 1 to 8, in which drying is carried out followed by impregnating said porous support with said liquid containing hydrolysable sources leading to said oxide, followed by bringing the surface of said impregnated support into contact with said aqueous liquid.

11. A process according to any one of claims 9 and 10, in which the operations described therein are repeated at least once.

12. A process according to any one of claims 1 to 10, in which the oxide consists of a zeolite.

13. A process according to claim 13, in which the aqueous liquid is constituted by water having added thereto at least one member selected from at least one polar organic solvent, at least one additive for the reaction of formation of said gel and at least one additive for the synthesis of said oxide.

14. A process according to claim 13, in which the gel formation reaction additive is selected from hydrochloric acid, hydrofluoric acid, caustic soda and ammonia.

15. A process according to any one of claims 13 and 14, in which the zeolite crystallisation additive is selected from tetrapropylammonium hydroxide or bromide, sodium or potassium hydroxide, ammonia, hydrofluoric acid and crown ethers.

16. A process according to any one of claims 12 to 15, in which washing and drying is carried out if necessary, followed by bringing said formed gel into contact for a second time with a solution containing at least one zeolite crystallisation additive and/or additional hydrolysable sources of the zeolite framework elements.

17. A process according to any one of claims 12 to 16, in which the zeolite is crystallised by bringing the formed gel into contact with saturated steam at temperatures in the range 50°C to 300°C.

18. A process according to claim 17, in which said steam phase contains volatile additives selected from acids, bases, amines and alcohols.

19. A process according to any one of claims 12 to 18, in which the membrane formed is cooled and washed and the washed membrane is then dried.

20. A process according to any one of claims 12 to 19, in which the operations described therein are repeated at least once on said formed membrane.

21. A process according to any one of claims 12 to 20, in which the membrane obtained is calcined by slow heating to a calcining temperature which is in the range 300°C to 800°C, for example for a period which is in the range 5 hours to 50 hours, said membrane being held at said calcining temperature, for example for a period which is in the range 10 minutes to 24 hours, said calcined membrane then being slowly cooled to ambient temperature, for example over a period which is in the range 1 hour to 24 hours.

22. A process according to claim 21, in which the zeolite formed includes an interlinkage of TO₄ tetrahedra where T is at least one element selected from Si, Al, B, Ga, Ge and P.

23. A process according to claim 21 or 22, in which the zeolite formed has a structural type selected from FAU, GME, MOR, OFF, MFI, MEL, FER, LTA and CHA.

24. A process according to any one of claims 21 to 23, in which the thickness of said continuous zeolite layer is in the range 1 µm to 100 µm.

25. A process according to any one of claims 1 to 11, in which the oxide consists of a silico-metallate including SiO₄ tetrahedra and TO₆ octahedra, where T is selected from Ti, Mn, Mo and W, such as a titanosilicate.

26. A process according to any one of claims 1 to 11, in which the oxide consists of a mesoporous oxide.

27. A process according to claim 26, in which a cationic surfactant such as a hexadecyltrimethylammonium halide is used as the mesoporous oxide synthesis additive.

28. A process according to any one of claims 26 and 27, in which the mesoporous oxide is synthesised directly after bringing the two immiscible liquids into contact.

29. A process according to any one of claims 26 and 27, in which the mesoporous oxide is synthesised after bringing the two immiscible liquids into contact, then bringing the formed gel into contact with saturated steam at a temperature which is in the range 50°C to 300°C, for example for a period which is in the range 1 hour to 15 days.

30. A process according to any one of claims 26 to 29, in which the membrane obtained is calcined by slowly heating to a calcining temperature which is in the range 300°C to 800°C, for example for a period which is in the range 5 hours to 50 hours, said membrane being held at said calcining temperature for a period which is, for example, in the range 10 minutes to 24 hours, said calcined membrane then being gradually cooled to ambient temperature, for example over a period which is in the range 1 hour to 24 hours.

31. A process according to any one of claims 1 to 11, in which said oxide is a non zeolitic microporous oxide and the aqueous liquid used contains the gel formation reaction additive or additives and the oxide formation reaction additive or additives and the non miscible liquid contains the hydrolysable sources leading to the desired microporous oxide.

32. A process according to claim 31, in which the support comprising the formed gel is dried at a temperature which is in the range 20°C to 200°C, for example over a period of 5 minutes to 24 hours; then calcined at a temperature of 300°C to 600°C, for example for a period of 5 minutes to 24 hours, the calcined membrane then being cooled to ambient temperature.
